(19) Europäisches Patentamt
European Patent Office
Office européen des brevets

(11) EP 3 777 618 A1

(12) EUROPEAN PATENT APPLICATION
published in accordance with Art. 153(4) EPC

(43) Date of publication:
17.02.2021 Bulletin 2021/07

(51) Int Cl.:
A47G 27/02 (2006.01)     B32B 5/02 (2006.01)

(21) Application number: 19775593.7

(22) Date of filing: 29.03.2019

(86) International application number:
PCT/JP2019/014096

(87) International publication number:
WO 2019/189798 (03.10.2019 Gazette 2019/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 30.03.2018 JP 2018068223

(71) Applicant: Toray Industries, Inc.
Tokyo, 103-8666 (JP)

(72) Inventors:
• MATSUMURA Kazuya
Tokyo 103-8666 (JP)
• TAKEDA Masanobu
Otsu-shi, Shiga 520-2141 (JP)
• KAJIYAMA Hiroshi
Otsu-shi, Shiga 520-2141 (JP)
• HASE Kazuharu
Hashima-shi, Gifu 501-6236 (JP)

(74) Representative: Mewburn Ellis LLP
Aurora Building
Counterslip
Bristol BS1 6BX (GB)

(54) CARPET AND PRODUCTION METHOD THEREFOR

(57) Provided is a carpet having transmissiveness and being capable of retaining quality including the light transmissiveness. The carpet 1 according to one embodiment is a carpet comprising: a pile layer 10 in which a plurality of pile yarns 12 are tufted on the front face 11a of a primary base fabric 11; and a backing layer 20 disposed on the back face 11b side of the primary base fabric 11, wherein the total light transmittance of the carpet is 0.5% or higher; the lightness when the carpet is viewed from the front face side of the primary base fabric is 30 or higher; and the thickness loss rate under dynamic loading accompanied by friction of the carpet is 25% or lower.

Fig. 1

**Description**

Technical Field

The present invention relates to a carpet and a method for producing the same.

Background Art

There is a demand for carpets which are disposed on light sources and when the light sources emit no light, are used as usual carpets, and when the light sources emit light, may display figures such as an emergency exit sign and an illuminated image. Patent Literatures 1 and 2 disclose such carpets having light transmissiveness.

Citation List

Patent Literature

Patent Literature 1: JP Patent Publication No. 2011-505181
Patent Literature 2: JP Patent PublicationNo. 2012-517263

Summary of Invention

Technical Problem

The carpets described in Patent Literatures 1 and 2 have light transmissiveness right after the production. When the carpets are used, however, since people walk on the carpets and casters are moved thereon, pile falling and other damages occur. Such damages may reduce quality including light transmissiveness.
Then, one aspect of the present invention has an object to provide a carpet having light transmissiveness and being capable of retaining quality including light transmissiveness.

Solution to Problem

A carpet according to a first aspect of the present invention is
a carpet comprising a pile layer comprising a primary base fabric and a plurality of pile yarns tufted on the front face of the primary base fabric, and a backing layer disposed on the back face side of the primary base fabric, wherein
the total light transmittance of the carpet is 0.5% or higher (hereinafter, referred to also as "condition 1");
the lightness when the carpet is viewed from the front face side of the primary base fabric is 30 or higher (hereinafter, referred to also as "condition 2"); and
the thickness loss rate under dynamic loading accompanied by friction of the carpet is 25% or lower (hereinafter, referred to also as "condition 3 ").
A carpet having the above constitution, since it meets the above condition 1 and condition 2, has light transmissiveness, and since it meets the condition 3, can retain quality including light transmissiveness when the carpet is used.
In one embodiment of the carpet according to the first aspect of the present invention, the yarn count density of the pile yarns in the pile layer may be 80 to 180 pile yarns/6.45 $cm^2$. Thereby, the above conditions 1 and 3 are more easily met.
In one embodiment of the carpet according to the first aspect of the present invention, the total light transmittance of the above primary base fabric may be 60% or higher and the total light transmittance of the above backing layer may be 50% or higher. Thereby, the above condition 1 is more easily met.
In one embodiment of the carpet according to the first aspect of the present invention, the pile height of the pile layer may be 4 to 10 mm. Thereby, the conditions 1 and 3 are more easily met.
In one embodiment of the carpet according to the first aspect of the present invention, the pile yarns may comprise polyamide-based fibers; the primary base fabric may be a polyester-based long-fiber nonwoven fabric; and the backing layer may comprise a vinyl chloride resin and a reinforcing material. This embodiment is preferable not only for enhancing the light transmissiveness of the carpet, but also for suppressing warping and dimensional changes of the carpet.
In one embodiment of the carpet according to the first aspect of the present invention, an example of the thickness of the backing layer is 1 to 4 mm.

In one embodiment of the carpet according to the first aspect of the present invention, the backing layer may be in contact with the back face of the primary base fabric. Thereby, the condition 1 is easily met.

In one embodiment of the carpet according to the first aspect of the present invention, the pile yarns comprise monofilaments and a degree of modification of the monofilaments may be 1.1 to 8. Thereby, the conditions 1 and 3 are more easily met.

In one embodiment of the carpet according to the first aspect of the present invention, the carpet may comprise two or more regions wherein the two or more regions each may have a total light transmittance different from that of other one or more regions among the two or more regions. The carpet according to this embodiment, since the regions have different light transmissivenesses, is useful for applications displaying predetermined texts, images, designs or other objects by emitting light therethrough. In this embodiment, it is preferable that the lightness when each of the two or more regions is viewed from the front face side of the primary base fabric is different from that when other one or more regions among the two or more regions are viewed from the front face side of the primary base fabric. It is easy for the total light transmittances of the two or more regions to be made different from each other by controlling the lightness by adjusting the type and the intensity of dyeing of the tufted yarns of the pile layer.

A carpet according to a second aspect of the present invention is a carpet comprising a pile layer comprising a primary base fabric and a plurality of pile yarns tufted on the front face of the primary base fabric, and a backing layer disposed on the back face side of the primary base fabric, wherein the carpet comprises a first portion and a second portion wherein the first portion meets the above condition 1, condition 2 and condition 3, and the second portion has a total light transmittance of lower than 0.5%.

The above carpet according to the second aspect of the present invention, since the above first portion meets the condition 1 and the condition 2, has light transmissiveness, and since the above first portion meets the condition 3, can retain quality including the light transmissiveness when the carpet is used. The above carpet according to the second aspect of the present invention, further since it comprises the above first portion and second portion, thereby enabling light to be transmitted preponderantly through the first portion, is useful for applications displaying predetermined texts, images, designs and other objects. In particular, the first portion encircled by the second portion, or the second portion encircled by the first portion is preferable, since they are easily visually recognized as distinct images when light is emitted from the back face of the carpet. In this embodiment, it is preferable that the lightness when the first portion is viewed from the front face side of the primary base fabric is different from that when the second portion is viewed from the front face side of the primary base fabric. It is easy for the total light transmittances of the first portion and the second portion to be made different from each other by controlling the lightness by adjusting the type and the intensity of dyeing of the tufted yarns of the pile layer.

In one embodiment of the carpet according to the second aspect of the present invention, it is preferable that the thickness loss rate under dynamic loading accompanied by friction of the second portion is 25% or lower.

In one embodiment of the carpet according to the second aspect of the present invention, at least in the first portion, preferably in both of the first portion and the second portion, the yarn count density of the pile yarns in the pile layer may be 80 to 180 pile yarns/6.45 cm$^2$. Thereby, the above conditions 1 and 3 are more easily met.

In one embodiment of the carpet according to the second aspect of the present invention, at least in the first portion, preferably in both of the first portion and the second portion, the total light transmittance of the primary base fabric may be 60% or higher and the total light transmittance of the backing layer may be 50% or higher. Thereby, the above condition 1 is more easily met.

In one embodiment of the carpet according to the second aspect of the present invention, at least in the first portion, preferably in both of the first portion and the second portion, the pile height of the pile layer may be 4 to 10 mm. Thereby, the conditions 1 and 3 are more easily met.

In one embodiment of the carpet according to the second aspect of the present invention, at least in the first portion, preferably in both of the first portion and the second portion, the pile yarns may comprise a polyamide-based fiber; the primary base fabric may be a polyester-based long-fiber nonwoven fabric; and the backing layer may comprise a vinyl chloride resin and a reinforcing material. This embodiment is preferable not only for enhancing the light transmissiveness of the carpet, but also for suppressing warping and dimensional changes of the carpet.

In one embodiment of the carpet according to the second aspect of the present invention, at least in the first portion, preferably in both of the first portion and the second portion, an example of the thickness of the backing layer is 1 to 4 mm.

In one embodiment of the carpet according to the second aspect of the present invention, at least in the first portion, preferably in both of the first portion and the second portion, the backing layer may be in contact with the back face of the primary base fabric. Thereby, the condition 1 is more easily met.

In one embodiment of the carpet according to the second aspect of the present invention, at least in the first portion, preferably in both of the first portion and the second portion, the degree of modification of monofilaments of the pile yarns may be 1.1 to 8. Thereby, the conditions 1 and 3 are more easily met.

In one embodiment of the carpet according to the second aspect of the present invention, the first portion may comprise two or more regions wherein the two or more regions each may have a total light transmittance different from that of other one or more regions among the two or more regions. The first portion of the carpet according to this embodiment, since the regions have different light transmissivenesses, is useful for applications displaying predetermined texts, images, designs or other objects by emitting light therethrough. In this embodiment, it is preferable that the lightness when each of the two or more regions is viewed from the front face side of the primary base fabric is different from that when other one or more regions among the two or more regions are viewed from the front face side of the primary base fabric. It is easy for the total light transmittances of the two or more regions to be made different from each other by controlling the lightness by adjusting the type and the intensity of dyeing of the tufted yarns of the pile layer.

A third aspect of the present invention relates to a method for producing the above carpet according to one embodiment of the first aspect of the present invention, wherein the carpet comprises two or more regions wherein the two or more regions each have a total light transmittance and a lightness in the case of being viewed from the front face side of the primary base fabric different from those of other one or more regions among the two or more regions. This method according to the third aspect of the present invention can comprise:

providing a carpet comprising a pile layer comprising a primary base fabric and a plurality of pile yarns tufted on the front face of the primary base fabric, and a backing layer disposed on the back face side of the primary base fabric, wherein the total light transmittance of the carpet is 0.5% or higher,
the lightness when the carpet is viewed from the front face side of the primary base fabric is 30 or higher, and
the thickness loss rate under dynamic loading accompanied by friction of the carpet is 25% or lower; and
region-selectively dyeing the pile layer of the carpet to form the two or more regions having different lightnesses in the case of being viewed from the front face side of the primary base fabric.

In the method according to the fifth aspect of the present invention, the light-transmissive carpet having two or more regions having different total light transmittances can easily be produced by controlling the lightness of the pile layer of the carpet by adjusting the type and the intensity of the dyeing.

A fourth aspect of the present invention relates to a method for producing the above carpet according to one embodiment of the second aspect of the present invention, wherein the first portion of the carpet comprises two or more regions wherein the two or more regions each have a total light transmittance and a lightness in the case of being viewed from the front face side of the primary base fabric different from those of other one or more regions among the two or more regions. This method according to the fourth aspect of the present invention can comprise:

providing a carpet comprising a pile layer comprising a primary base fabric and a plurality of pile yarns tufted on the front face of the primary base fabric, and a backing layer disposed on the back face side of the primary base fabric, wherein the total light transmittance of the carpet is 0.5% or higher,
the lightness when the carpet is viewed from the front face side of the primary base fabric is 30 or higher, and
the thickness loss rate under dynamic loading accompanied by friction of the carpet is 25% or lower; and
region-selectively dyeing the pile layer of the carpet to form the first portion comprising the two or more regions having different lightnesses in the case of being viewed from the front face side of the primary base fabric.

In the method according to the fifth aspect of the present invention, the carpet comprising the first portion having two or more regions having different total light transmittances can easily be produced by controlling the lightness of the pile layer of the carpet by adjusting the type and the intensity of the dyeing.

A fifth aspect of the present invention relates to a method for producing the carpet according to one embodiment of the second aspect of the present invention wherein the lightness when the first portion is viewed from the front face side of the primary base fabric is different from that when the second portion is viewed from the front face side of the primary base fabric. This method according to the fifth aspect of the present invention can comprise:

providing a carpet comprising a pile layer comprising a primary base fabric and a plurality of pile yarns tufted on the front face of the primary base fabric, and a backing layer disposed on the back face side of the primary base fabric, wherein the total light transmittance of the carpet is 0.5% or higher,
the lightness when the carpet is viewed from the front face side of the primary base fabric is 30 or higher, and
the thickness loss rate under dynamic loading accompanied by friction of the carpet is 25% or lower; and
region-selectively dyeing the pile layer of the carpet to form the first portion and the second portion having different lightnesses in the case of being viewed from the front face side of the primary base fabric.

In the method according to the fifth aspect of the present invention, the carpet comprising the first portion and the second portion having different total light transmittances can easily be produced by controlling the lightness of the pile layer of the carpet by adjusting the type and the intensity of the dyeing.

The present description includes the disclosed contents of Japanese Patent Application No. 2018-068223, based on which priority of the present application is claimed.

Advantageous Effects of Invention

According to the first aspect and the second aspect of the present invention, a carpet having light transmissiveness and being capable of retaining quality including the light transmissiveness can be provided.
According to the third aspect, the fourth aspect and the fifth aspect of the present invention, a light-transmissive carpet comprising a plurality of portions having different light transmittances can easily be produced.

Brief Description of Drawings

[Figure 1] Figure 1 illustrates a schematic constitution of a carpet according to one embodiment.
[Figure 2] Figure 2 is an schematic plan view from the side of a pile layer 10 of a carpet 1 which wholly meets the conditions 1 to 3 and is sectioned into first regions 31, second regions 32 and third regions 33, wherein the first region 31, the second region 32 and the third region 33 have total light transmittances different from each other.
[Figure 3] Figure 3 is a schematic plan view from the side of a pile layer 10 of a carpet 1 which has first portions 30 meeting the conditions 1 to 3 and second portions 40 having a total light transmittance of lower than 0.5%, wherein the first portions 30 are further sectioned into first regions 31 and second regions 32, and the first region 31 and the second region 32 have total light transmittances different from each other.
[Figure 4] Figure 4 is a schematic plan view from the side of a pile layer 10 of a carpet 1 of Example 9.

Description of Embodiments

Embodiments of the present invention will be described by reference to the drawings. The same reference sign will be attached to the same element and explanations will be omitted. Dimensional ratios in the drawings do not necessarily coincide with those in interpretations.

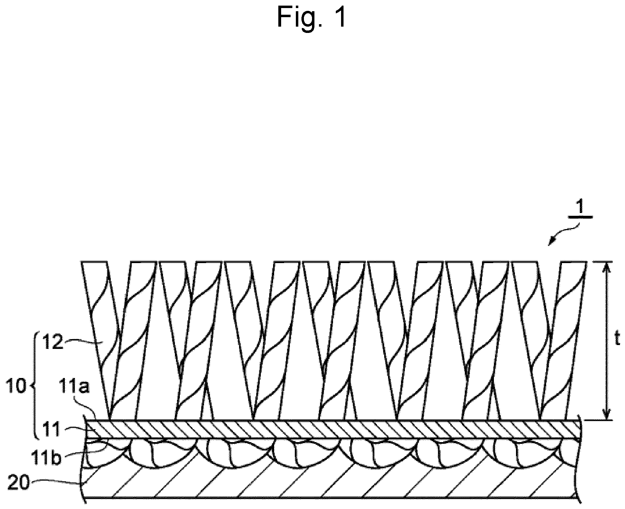

Figure 1 illustrates a schematic constitution of a carpet according to one embodiment, and is a schematic view of a cross-sectional structure of a part of the carpet. As shown in Figure 1, the carpet 1 comprises a pile layer 10 in which a plurality of pile yarns 12 are tufted on the front face 11a of a primary base fabric 11, and a backing layer 20 disposed on the back face 11b side of the primary base fabric 11. The carpet 1 is a multilayered product comprising the backing layer 20 and the pile layer 10. Hereinafter, for convenience of explanation, in the carpet 1, the backing layer 20 side is called the back face side, and the pile layer 10 side (specifically, the side on which the pile yarns 12 are exposed) is called the front face side.
The carpet 1 has light transmissiveness. When the carpet 1 having light transmissiveness is disposed on light sources (for example, walkable LED displays, and illuminators embedded in floors), texts, images or other objects can be displayed through the carpet 1. Such a carpet 1 having light transmissiveness, when the light sources emit no light, is used as a usual carpet 1, and when the light sources emit light, can display figures such as an emergency exit sign and an illuminated image. Applications of the carpet 1 are not limited to the above exemplification, and may include applications in which light is required to be passed through the carpet 1. The carpet 1 can be used, for example, in commercial facilities such as offices, hospitals, hotels, art museums, banks, movie theaters and airports, and railway vehicles, ships and automobiles.
The carpet 1 meets the following conditions 1 to 3.

- Condition 1: the total light transmittance of the carpet 1 is 0.5% or higher.
- Condition 2: the lightness (L value) of the carpet 1 is 30 or higher.
- Condition 3: the thickness loss rate under dynamic loading accompanied by friction of the carpet 1 is 25% or lower.

The "total light transmittance of the carpet 1" is a value obtained by measurement according to "JIS 7361". For example, when a plurality of any spots (for example, 5 spots) of the carpet 1 are sampled and the total light transmittances thereof are measured according to JIS 7361, the average value of measurement values of the plurality of spots can be adopted.
The "lightness of the carpet 1" is a value measured by using a spectrocolorimeter, and can be an average value of measurement values obtained by sampling regions having the same area from any, for example, 5 spots of the carpet 1. The lightness of the carpet 1 is a lightness of the front face side of the carpet 1.
The "thickness loss rate under dynamic loading accompanied by friction" is a value obtained by measurement according to "JIS L1021-7:2007, 5.1 (thickness loss under dynamic loading accompanied by friction)". The thickness loss rate under dynamic loading accompanied by friction corresponds substantially to a thickness reduction rate of the front face side (pile yarn side) of the carpet 1.

When the carpet 1 meeting the condition 1 is disposed on a light source and texts, images (for example, signs) or other objects are displayed through the carpet 1, they can clearly be recognized. It is preferable that the total light transmittance of the carpet 1 is 0.6% or higher.

The carpet 1 meeting the condition 2 can suppress absorption of light by the pile yarns 12 regardless of color, and can secure the light transmissiveness. That is, meeting the condition 2 can reduce the influence of color on the total light transmittance of the carpet 1. It is preferable that the lightness (L value) is in the range of 50 to 85.

In the case of using spun dyed yarns as the pile yarns 12, the lightness can be controlled by adjusting the concentration (spun dyeing concentration) of pigments contained in the yarns. In the case of using white yarns dyed with a dye as the pile yarns 12, the lightness can be controlled by the dyeing condition. As a dyeing method in this case, for example, cheese dyeing, or hank dyeing can be adopted. When the pile layer 10 (pile yarn part) is dyed with a dye after the pile layer 10 is formed or after the pile layer 10 and the backing layer 20 are combined, the lightness can be controlled by adjusting the dyeing condition. As a dyeing method in this case, wince dyeing, or inkjet dyeing can be adopted.

By the carpet 1 meeting the condition 3, the pile falling and other damages of the pile yarns 12 caused by friction when, for example, heels of shoes and casters of chairs move on the carpet 1 can be suppressed. The pile falling and other damages can decrease the light transmissiveness of the carpet. Meeting the condition 3 can prevent the decrease in the light transmissiveness due to the pile falling. Hence, when the carpet 1 is used, the quality including the light transmissiveness of the carpet 1 can be retained. The thickness loss rate under dynamic loading accompanied by friction is preferably 20.0% or lower. From the viewpoint of such quality retention as prevention of a decrease in the light transmissiveness, a lower loss rate is better. However, from the view point of meeting the condition 1, the loss rate may be 8% or higher, and may be 10% or higher.

Therefore, by meeting the conditions 1 to 3, the carpet 1 has the light transmissiveness, and even when the carpet 1 is used, the quality including the light transmissiveness can be retained.

When the carpet 1 is actually used, people, casters, and push cars move on the carpet 1 and the carpet 1 is trodden by their heels or tires. Hence, it is preferable that the yarn withdrawal strength of the pile yarns 12 is 10 N or higher. When the carpet 1 having the yarn withdrawal strength being 10 N or higher is trampled by feet, falling-off of the pile yarns 12 from the primary base fabric 11 can be prevented. Hence, the quality of the carpet 1 is easily retained. The yarn withdrawal strength is more preferably 13 N or higher. The yarn withdrawal strength can be a value measured according to "JIS L1021-8, B method (tuft withdrawal force)".

It is preferable that the light resistance (light fastness) of the carpet 1 is class 3 or higher. With the light resistance of the carpet 1 being class 3 or higher, for example, when the carpet 1 is used outdoor or at the window, the change in lightness (discoloration) by ultraviolet rays can be suppressed and the fluctuation in the light transmissiveness by the change in the lightness can be reduced. As a result, the quality of the carpet 1 can be retained more. The light resistance can be a value measured according to "JIS L4405, 9.5.1 (light fastness)".

The warping of the carpet 1 is preferably 1.5 mm or smaller, and the dimensional change rate is preferably 0.1% or lower. In this case, the liftoff of the carpet 1 from a predetermined place by the influence of warping or dimensional change can be suppressed. The warping of the carpet 1 can be a value measured according to "JIS L4406, 7.9 (warping)". The dimensional change rate of the carpet 1 can be a value measured according to "JIS L4406, 7.8 (dimensional change rate due to heat and water effects)".

Then, one example of the constitution of the carpet 1 meeting the conditions 1 to 3 will be described in detail. As described above, the carpet 1 comprises the pile layer 10 and the backing layer 20. The backing layer 20 is in contact with the primary base fabric 11 of the pile layer 10 through no another layer (for example, a precoat layer) therebetween.

[Pile layer]

The pile layer 10 comprises the primary base fabric 11 and the plurality of pile yarns 12 wherein the plurality of pile yarns 12 are tufted on the primary base fabric 11.

The primary base fabric 11 suffices if it transmits light and is capable of being tufted with the pile yarns 12. The total light transmittance of the primary base fabric 11 is, for example, 60% or higher. The value of the total light transmittance can measured by the same method as the above measuring method of the total light transmittance of the carpet 1. With the total light transmittance being 60% or higher, the above condition 1 is more easily met. The basis weight of the primary base fabric 11 is, for example, 80 to 120 g/m². When the pile yarns 12 are tufted to the primary base fabric 11 having the basis weight in the above range, the primary base fabric 11 is hardly torn. In general, a higher total light transmittance is better. In this embodiment, the total light transmittance is preferably such a value that the above basis weight range can be materialized. An example of the thickness of the primary base fabric 11 is 0.2 mm to 0.9 mm.

An example of the primary base fabric 11 is a nonwoven fabric. In woven fabric, the difference in the light transmittance between gap portions and yarn portions becomes large. In contrast, nonwoven fabric easily transmits light uniformly. The primary base fabric 11 is, for example, a polyester-based long-fiber nonwoven fabric. An example of the polyester-based long-fiber nonwoven fabric includes a PET long-fiber nonwoven fabric produced by a spunbond process using a polyethylene terephthalate (PET). When the primary base fabric 11 is the polyester-based long-fiber nonwoven fabric, the polyester-based long fibers (yarn portions) are preferably dispersed substantially uniformly in the primary base fabric 11. In this case, it is easy for light to be transmitted uniformly. When the basis weight of the polyester-based long-fiber nonwoven fabric is the above 80 to 120 $g/m^2$, as described above, the primary base fabric 11 is hardly torn in the tufting time of the pile yarns 12. A binder in the nonwoven fabric suffices as long as the nonwoven fabric is constituted so as to meet the condition 1.

The yarn count density of the pile yarns 12 (hereinafter, referred to simply as "pile count density") in the primary base fabric 11 is, for example, 80 to 180 pile yarns/6.45 $cm^2$. When the yarn count density of the pile yarns 12 is 80 pile yarns/6.45 $cm^2$ or higher, the carpet 1 easily retains its wear resistance, its designability and its quality level, without losing its capability to transmit light. When the yarn count density is 180 pile yarns/6.45 $cm^2$ or lower, light transmitted through the carpet 1 is clearly recognized from above (front face side of) the carpet 1. Therefore, with the pile count density being in the above range, the conditions 1 and 3 are easily met. The pile count density is preferably 100 to 170 pile yarns/6.45 $cm^2$, and more preferably 105 to 160 pile yarns/6.45 $cm^2$.

Examples of a material of the pile yarns 12 include polyamide-based, polyester-based, polyethylene-based, polypropylene-based and natural (wool, cotton) fibers. Among the examples of a material of the pile yarns 12, a single material may be used, or two or more materials may be used in combination. From the viewpoint of the wear resistance, it is preferable to use polyamide-based fibers as the pile yarns 12, and it is more preferable to use the polyamide-based fibers in 80 to 100% by mass.

The cross-sectional shape of the pile yarns 12 is not limited, but is, for example, a Y shape, a cross-in square shape, or a hollow Y shape.

An example of the degree of modification of monofilaments constituting the pile yarns 12 is 8 or lower. The degree of modification is defined as a ratio (D1/D2) of a diameter D1 of a circumscribed circle of a cross section in image data of cross sections of monofilaments constituting the pile yarns 12 to a diameter D2 of an inscribed circle thereof. The circumscribed circle is defined as a circle having the smallest diameter among circles in contact with the contour of a cross section of a monofilament at at least two points and encircling the cross section of the monofilament. The inscribed circle is defined as a circle having the largest diameter among circles in contact with the contour of the cross section of the monofilament at at least two points and being encircled by the cross section of the monofilament. When the pile yarns 12 are constituted of a plurality of monofilaments, the degree of modification can be a value obtained by calculating degrees of modification of all monofilaments constituting the pile yarns 12 and thereafter selecting several calculated values (for example, 10 values) in the order of lower values from the highest value, averaging the selected values and rounding the average value to one decimal place.

With the degree of modification being 8 or lower, breaking of fibers by trampling and wearing can be suppressed more and the durability to cleaning and repeated trampling is improved. On the other hand, a higher degree of modification can improve more the bulkiness of the pile layer 10. With the improved bulkiness of the pile layer 10, even when the pile count density is decreased in order for light to be transmitted, sufficient wear resistance can be provided. That is, the conditions 1 and 3 are more easily met. From that viewpoint, the degree of modification is preferably 1.1 or higher, and more preferably 1.3 or higher.

For example, polypropylene-based and polyester-based fibers are lower in the durability than polyamide-based fibers. Therefore, when the material of the pile yarns 12 is polypropylene-based or polyester-based fibers, it is preferable that the degree of modification is 1.1 to 3.0. When the material of the pile yarns 12 is polyamide-based fibers (for example, nylon fibers), the degree of modification is more preferably 1.5 to 7.5, still more preferably 2 to 7, and especially preferably 2.5 to 6.5.

The pile yarns 12 may comprise one or more selected from the group consisting of bulked continuous filaments (hereinafter, referred to as "BCF"), spun yarns, monofilaments and multifilaments (straight strings). In this case, part of or the whole of the pile yarns 12 may be BCF.

The BCF is a bulky continuous long-fiber having bulkiness due to bending of monofilaments and entanglement of monofilaments. By using BCF as part of or the whole of the pile yarns 12, the bulkiness of the pile layer 10 can be improved. With the improved bulkiness of the pile layer 10, as described above, the durability to cleaning and repeated trampling is improved; and the improvement of the durability to cleaning and repeated trampling can suppress distortion of texts, images or other objects displayed through the carpet 1.

The total fineness of BCF to be used is, from the viewpoint of improving the light transmittance and the wear resistance, preferably 800 to 5,000 dtex, and more preferably 1,000 to 3,000 dtex. It is preferable that the fineness of monofilaments of BCF is 2.5 to 30 dtex.

It is preferable that the crimp elongation rate after a boiling water treatment of BCF is 10 to 30%. By setting the crimp elongation rate after a boiling water treatment to 10% or higher, the carpet 1 being soft and good in elasticity can be made. On the other hand, by setting the crimp elongation rate after a boiling water treatment to 30% or lower, the carpet 1 having voluminous feeling (puffiness) and improved wear resistance is obtained.

The crimp elongation rate of BCF after the treatment with boiling water can be a value calculated, for example, according to the following. Crimped yarns (BCF) unwound from a package left in an atmosphere of 25°C of room temperature and a relative humidity of 65% for 24 hours is subjected to an immersion process in a no-load state and with boiling water for 30 min, thereafter dried at 25°C of room temperature and a relative humidity of 65% for 24 hours, and used as a sample for measuring the crimp elongation rate after a boiling water treatment. An initial load of 2 mg/dtex is applied to this sample in an atmosphere of 25°C of room temperature and a relative humidity of 65%, and after 30 sec elapses, markings are made on at 50 cm of the sample length (L1). Then, after the initial load is removed, a constant load of 100 mg/dtex is applied to the sample, and after 30 sec elapses, the elongated sample length (L2) is measured. Then, the elongation rate (%) after the boiling water treatment is calculated by the following expression.

$$\text{Crimp elongation rate after boiling water treatment (\%)} = [(L2 - L1)/L1] \times 100$$

An example of the degree of modification of monofilaments constituting BCF is the same as the above example of the degree of modification of monofilaments constituting the pile yarns 12.

Even if the pile count density is raised, in order to make it easy for light to be transmitted by opening gaps between the pile yarns 12, twisted yarns may be used for the pile yarns 12. A twisting method may be either of single twisting and ply twisting. It is preferable that the number of twists is 10 to 250/m. In the case of the single twist, it is more preferable that the number of twists is 10 to 60/m. In the case of the ply twist, in both of final twist and first twist, it is more preferable that the number of twists is 50 to 250/m. When the ply twisting is carried out, for twist setting and enhancing the bulkiness of crimped yarns, heat setting may be carried out. Examples of a heat setting method include a continuous setting method (setting method using steam or dry heat in a loose state) and a method using an autoclave, and the heat setting temperature is, for example, 110 to 150°C.

The pile yarns 12 may comprise, for example, one or more selected from the group consisting of antioxidants, heat stabilizers, weatherproof agents, pigments, gloss improvers, dyes, crystal nucleating agents, plasticizers, antistatic agents, and flame retardants.

Examples of the antioxidants include sulfur-containing or phosphorus-containing acids. Examples of the heat stabilizers include hindered phenol-based, hydroquinone-based, phosphorus-containing, imidazole-based and thiazole-based compounds, and substitution products thereof, copper halides and iodine compounds. Examples of the weatherproof agents include resorcinol-based, salicylate-based, benzotriazole-based, benzophenone-based and hindered amine-based ones. Examples of the pigments include cadmium sulfide, phthalocyanine and carbon black. Examples of the gloss improvers include titanium oxide and calcium carbonate.

Examples of the dyes include nigrosine and aniline black. Examples of the crystal nucleating agents include talc, silica, kaolin and clay. Examples of the plasticizers include octyl p-oxybenzoate and N-butylbenzenesulfonamide. Examples of the antistatic agents include alkylsulfate-type anionic antistatic agents, quaternary ammonium salt-type cationic antistatic agents, non-ionic antistatic agents such as polyoxyethylene sorbitan monostearate, and betaine-based amphoteric antistatic agents. Examples of the flame retardants include melamine cyanurate, hydroxides such as magnesium hydroxide and aluminum hydroxide, ammonium polyphosphate, brominated polystyrene, brominated polyphenylene oxide, brominated polycarbonate, brominated epoxy resins, and combinations of these brominated flame retardants and antimony trioxide.

An example of the pile height of the pile layer 10 is 4 to 10 mm. The pile height is a distance t (see Figure 1) between the front face 11a of the primary base fabric 11 and the upper ends of the pile yarns 12 exposed from the primary base fabric 11 to the front face 11a side. By setting the pile height to 4 mm or longer, the cushioning properties and the quality level as the carpet 1 can be retained while the carpet 1 transmits light; and by setting the pile height to 10 mm or shorter, light can be transmitted sufficiently. Hence, with the pile height being in the above range, the conditions 1 and 3 can be more easily met. From the same viewpoint, the pile height is more preferably 4 to 8 mm.

Patterns may be attached to the pile layer 10. The patterns are not especially specified, but preferable are cut patterns, loop patterns and cut & loop patterns.

The pile layer 10 may be dyed. A dyeing method includes, as described above, wince dyeing, print dyeing, means of yarn dyeing (cheese dyeing, hank dyeing) of the pile yarns 12 before being tufted, and means of using spun-dyed yarns as the pile yarns 12 before being tufted. Thereby, the lightness can be controlled.

[Backing layer]

The backing layer 20 suffices as long as it transmits light and is so constituted that the pile yarns 12 are hardly withdrawn from the primary base fabric 11. It is preferable that the total light transmittance of the backing layer 20 is 50% or higher. For example, when the total light transmittance of the primary base fabric 11 is 60% or higher and the total light transmittance of the backing layer is 50% or higher, the condition 1 is more easily met.

The total light transmittance of the backing layer 20 can measured by the same measuring method as the measuring method of the total light transmittance of the carpet 1. With regard to the total light transmittance of the backing layer of the carpet as a product, a region (in any height) of 15 cm (in length) $\times$ 15 cm (in width) is cut out from the backing layer, and a sheet of 10 cm (in length) $\times$ 10 cm (in width) $\times$ 3 mm (in height) having the same material constitution as the region is fabricated; and the total light transmittance of the sheet may be regarded as the total light transmittance of the backing layer 20.

An example of the backing layer 20 may mainly have a transparent resin layer. Examples of a material of the transparent resin layer include a vinyl chloride resin, a polyethylene resin, and a polypropylene resin. From the viewpoint of the durability, a vinyl chloride resin is preferable.

The backing layer 20 may be added with inorganic particles for reduction of processing costs in such a degree that the transmission of light is not intercepted. For example, inorganic particles may be added to the above-mentioned transparent resin layer. The amount of the inorganic particles to be added is, per 100 parts by weight of a resin constituting the transparent resin layer of the backing layer, preferably 5 to 50 parts by weight, and more preferably 10 to 30 parts by weight. Examples of the inorganic particles include particles of aluminum oxide, titanium oxide, marble, or kaolin. Aluminum oxide is preferable because of not inhibiting the transmission of light.

The backing layer 20, in order to suppress warping and shrinking (dimensional change rate) of the carpet 1, may be unified with a reinforcing material. For example, the reinforcing material can be embedded in the backing layer 20. The reinforcing material has, for example, a sheet shape. The backing layer 20 may comprise the above-mentioned transparent resin layer and a sheet-shape reinforcing material embedded in the resin layer. The above inorganic particles may be added to such a backing layer 20. Examples of the reinforcing material include woven fabrics and glass nonwoven fabrics. It is preferable that the total light transmittance of the reinforcing material to be used is 70% or higher, in order to make the transmissiveness of light not to be inhibited. In order to retain the shape of the backing layer 20, the basis weight of the reinforcing material is preferably 30 to 80 g/m$^2$, and more preferably 40 to 70 g/m$^2$.

In order to retain the shape and the light transmissiveness of the carpet 1, the basis weight of the backing layer 20 is preferably 500 to 3,000 g/m$^2$. The thickness of the backing layer 20 is preferably 1 to 4 mm, and more preferably 2 to 4 mm.

The carpet 1 can be produced by combining the pile layer 10 and the backing layer 20. Combining the pile layer 10 and the backing layer 20 is preferably conducted by a method of disposing a melted transparent resin on the back face 11b of the pile layer 10 to form the backing layer 20. This method is preferable because the pile yarns 12 needs to be fixed to the pile layer 10 so as not to be withdrawn from the pile layer 10.

The carpet 1 having the above constitution meets the conditions 1 to 3. The carpet 1 can have a light transmissiveness and retain the quality including the light transmissiveness even in use. Further, the carpet 1 has a simple constitution having no special structure such as a waveguide to transmit light. Therefore, production costs of the carpet 1 can also be reduced.

[Carpet comprising a plurality of regions having different total light transmittances]

The carpet 1 having the above constitution may be one meeting the conditions 1 to 3 in the whole thereof in plan view, or may be one meeting the conditions 1 to 3 in part thereof in plan view. Further, a part meeting the conditions 1 to 3 in the carpet 1 having the above constitution may have a uniform total light transmittance over the entire, or may have two or more regions which each may have total light transmittances different from those of other one or more regions among the two or more regions. In this embodiment, a more preferable embodiment of parts meeting the conditions 1 to 3 of the carpet 1 is as already described above for the carpet 1.

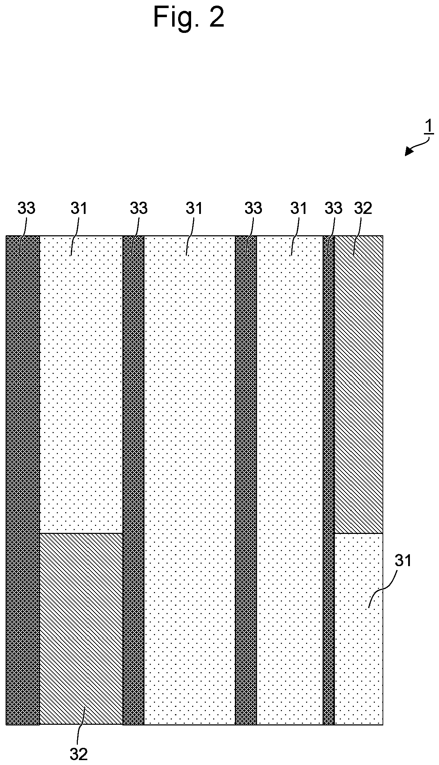

Figure 2 shows a specific example in which in plan view from the side of the pile layer 10 of the carpet 1, the carpet 1 meets the conditions 1 to 3 in the whole thereof and is sectioned into three types of regions including first regions 31, second regions 32 and third regions 33, wherein the first region 31, the second region 32 and the third region 33 have total light transmittances different from each other. In this specific example, the first region 31, the second region 32 and the third region 33 are each provided on two or more places. The carpet 1 shown in Figure 2 is an example in which the total light transmittance decreases in the order of the first region 31, the second region 32 and the third region 33. In this example, the carpet 1 has the light transmissiveness in the whole thereof in plan view, since the total light transmittance is 0.5% or higher even for the third region 33 having the lowest total light transmittance. The carpet 1 shown in Figure 2 is disposed on light sources. When light is emitted from the light sources, the quantity of light passing through the carpet 1 reduces in the order of the first region 31, the second region 32 and the third region 33, and accordingly the carpet 1 can display texts, images, designs or other objects according to shapes of the first region 31, the second region 32 and the third region 33.

Means of contorolling the total light transmittances of the first region 31, the second region 32 and the third region 33 is not especially limited. Examples of the means include a method comprising providing a carpet having a uniform structure in the whole thereof in plan view and meeting the conditions 1 to 3, and then region-selectively dyeing a pile layer of the carpet so that the dyeing condition is different among each region, to form first regions 31, second regions 32 and third regions 33 having different lightnesses, that is, different total light transmittances. It is preferable that the region-selective dyeing of the pile layer of the carpet is carried out by using an inkjet printing machine.

[Carpet comprising a first portion and a second portion]

The carpet 1 having the above constitution may comprise a first portion meeting the conditions 1 to 3 in plan view and a second portion having a total light transmittance of lower than 0.5% therein. Further also in this case, the first portion meeting the conditions 1 to 3 may have a uniform total light transmittance in the whole thereof, or may comprise two or more regions wherein the two or more regions each may have a total light transmittance different from that of other one or more regions among the two or more regions.

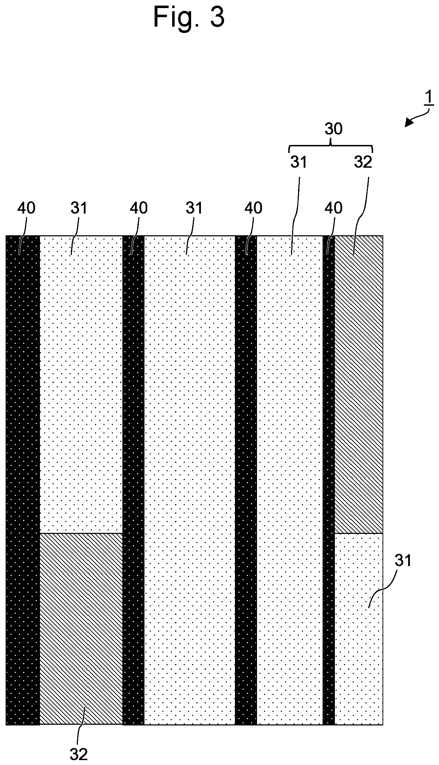

Figure 3 shows a specific example in which in plan view from the side of the pile layer 10 of the carpet 1, the carpet 1 comprises first portions 30 meeting the conditions 1 to 3 and second portions 40 having a total light transmittance of lower than 0.5%, wherein the first portions 30 are further sectioned into two types of regions including first regions 31 and second regions 32, and the first region 31 and the second region 32 have total light transmittances different from each other. In this specific example, the first region 31, the second region 32 and the second portion 40 are provided each on two or more places. The carpet 1 shown in Figure 3 is an example in which the total light transmittance decreases in the order of the first region 31, the second region 32 and the second portion 40. In this example, the second portion 40, which has the lowest total light transmittance, has a total light transmittance of lower than 0.5%, having a very low light transmissiveness, while the first region 31 and the second region 32 constituting the first portion 30 have a sufficiently high light transmissiveness. The carpet 1 shown in Figure 3 is disposed on light sources. When light is emitted from the light sources, light is intercepted in the second portion 40 and light is transmitted in the first region 31 and the second region 32, and moreover, the quantity of light passing through the carpet 1 reduces in the order of the first region 31 and the second region 32. Accordingly the carpet 1 can display texts, images, designs or the other objects according to shapes of the first region 31, the second region 32 and the second portion 40. The first region 31 or the second region 32 contiguous to the second portion 40 is clearly visually recognized as especially distinct images.

Means of controlling the total light transmittances of the first region 31, the second region 32 and the second portion 40 is not especially limited. Examples of the means include a method comprising providing a carpet having a uniform structure in the whole thereof in plan view and meeting the conditions 1 to 3, and then region-selectively dyeing a pile layer of the carpet so that the dyeing condition is different among each region, to form first regions 31, second regions 32 and second portions 40 having different lightnesses, that is, different total light transmittances. It is preferable that the region-selective dyeing of the pile layer of the carpet is carried out by using an inkjet printing machine.

The lightness (L value) of the second portion 40 of the carpet 1 can suitably be controlled so that the total light transmittance becomes lower than 0.5%. The lightness (L value) of the second portion 40 is typically lower than 30 and preferably lower than 20. Although in the example shown in figure, the second portion 40 of the carpet 1 has wholly uniform lightness and total light transmittance, the second portion 40 may comprise a plurality of regions having different lightnesses and total light transmittances.

In the carpet comprising the first portion and the second portion as shown in Figure 3, the proportion of the first portion is not especially limited. In plan view of the carpet, it is preferable that the area of the first portion is made to be 20% or higher based on the total area of the first portion and the second portion.

In the carpet comprising the first portion and the second portion as shown in Figure 3, a more preferable embodiment of the first portion is as already described above for the carpet 1. Further a more preferable embodiment regarding characteristics of the second portion other than the total light transmittance and the lightness is as already described above for the carpet 1. For example, it is preferable that the thickness loss rate under dynamic loading accompanied by friction of the second portion is 25.0% or lower. From the viewpoint of such quality retention as prevention of a decrease in the light transmissiveness, a lower loss rate is better. The loss rate may be 10% or higher or 8% or higher.

Examples

Hereinafter, the present invention will be described based on Examples, but the present invention is not limited to the following Examples. In Examples and Comparative Examples, carpets were produced by disposing a backing layer embedded with a reinforcing material on a pile layer obtained by tufting a primary base fabric with a plurality of pile yarns. The carpets of Examples 1 to 8 and Comparative Examples 1 to 4 were prepared by variously varying conditions of constituents of the carpets; and for each carpet, there were measured the total light transmittance, the lightness (L value) and the thickness loss rate under dynamic loading accompanied by friction, and also the basis weight (g/m$^2$), the yarn withdrawal strength (N), the warping (mm), the dimensional change rate (%) and the light resistance (class). The carpets and their constituents in the Examples and Comparative Examples were evaluated by the following methods.

(1) The total fineness and the monofilament fineness of BCF

A hank of 10 m in total length was obtained by 10 times rotating a sizing reel of 1 m/lap under an applied tension of 0.05 cN/dtex; and the weight of the hank was measured and multiplied by 1,000 to thereby determine the total fineness. Then, the total fineness was divided by the number of filaments to thereby determine the monofilament fineness.

(2) The degree of modification of BCF

Crimped yarns (BCF) were fixed in an embedding material; and a cut piece was cut out and after being de-embedded, was photographed by an optical microscope at a magnification of 500X. A scale was also similarly photographed at a magnification of 500X. The taken image was digitized; and thereafter, by using image analysis software "WinROOF, ver.5.0", manufactured by Mitani Corp., there were measured the diameter D1 of a circumscribed circle of a cross section of a monofilament and the diameter D2 of an inscribed circle of the cross section of the monofilament. Then, the degree of modification of the monofilament was determined by the following expression. Then, after the degrees of modified cross section of all monofilaments constituting the BCF were calculated, 10 calculated values in the order of lower values from the highest value were selected and averaged, and a value obtained by rounding the average value to one decimal place was taken as the degree of modification.

$$\text{Degree of modification} = D1/D2$$

The circumscribed circle was defined as a circle having the smallest diameter among circles in contact with the contour of a cross section of a monofilament at at least two points and encircling the cross section of the monofilament. The inscribed circle was defined as a circle having the largest diameter among circles in contact with the contour of the cross section of the monofilament at at least two points and being encircled by the cross section of the monofilament.

(3) The number of twists

According to JIS L1013 (2010), by using a twist counter, manufactured by Asano Kikai Seisaku K.K., and with the chucking distance being set at 50 cm, a sample was attached under an initial load of 8.82 mN $\times$ an indicated decitex, and the number of twists was measured, and the number of twists per 1 m was determined by doubling the measurement value.

(4) The pile count density in the pile layer

A pile layer of a carpet was magnified with a loupe, and the number of warps/wefts per 2.54 cm square was counted; and the count value was taken as the pile count density (the number of pile yarns/6.45 cm$^2$).

(5) The pile height

The pile height (mm) was measured by placing a metal ruler on the carpet side face.

(6) The thickness of a backing layer

The thickness (mm) of a backing layer was measured by placing a metal ruler on the carpet side face.

(7) The basis weight (weight)

A measuring object for the basis weight was cut out into a 50 cm square and the weight was measured, and a weight in terms of unit area (1 m$^2$) was taken as the basis weight (g/m$^2$) of the measuring object.

(8) The lightness (L value)

The lightness (L value) was measured by using a spectrocolorimeter (CM-3600A), manufactured by Konika Minolta Japan, Inc. Specifically, 5 regions each having a measuring area of 706.5 mm$^2$ were sampled from a carpet, and measured by the above spectrocolorimeter; and the average value was taken as the lightness.

(9) The total light transmittance

The total light transmittance was measured according to "JIS 7361" and by using a haze meter (NDH4000), manufactured by Nippon Denshoku Industries Co., Ltd. Specifically, the total light transmittances of 5 places in a measuring object were measured and the average value was taken as the total light transmittance of the measuring object.
(10) The yarn withdrawal strength of a carpet
The yarn withdrawal strength was measured according to "JIS L1021-8, B method (tuft withdrawal force)", and by using a Tensilon universal material tester, manufactured by A&D Co., Ltd.

(11) The warping of a carpet

The warping was measured according to "JIS L4406, 7.9 (warping)".

(12) The dimensional change rate of a carpet

The dimensional change rate was measured according to "JIS L4406, 7.8 (dimensional change rate due to heat and water effects)".

(13) The light resistance of a carpet

The light resistance was measured according to "JIS L4405, 9.5.1 (light fastness)" and by using an ultraviolet fadeometer, manufactured by Suga Test Instruments Co., Ltd.

(14) A wearing test

A wearing test was carried out according to "JIS L1021-7:2007, 5.1 (thickness loss under dynamic loading accompanied by friction)".

[Example 1]

In Example 1, a backing layer unified with a reinforcing material was disposed on a pile layer obtained by tufting a primary base fabric with a plurality of pile yarns to thereby produce a carpet. The reinforcing material had a sheet shape, and was embedded in the backing layer. In the carpet of Example 1, the backing layer was in contact with the back face of the primary base fabric. The conditions of the pile layer and the backing layer were as follows.

[Pile layer]

The pile yarn used was a yarn made by twisting two BCFs.

- Material of the pile yarn: nylon 6
- Total fineness of BCF: 1,050 dtex
- Number of filaments (monofilaments) of BCF: 54
- Fineness of the monofilaments of BCF: 19.4 dtex
- Cross-sectional shape of the monofilaments of BCF: a Y shape
- Degree of modification of the monofilaments of BCF: 3.4
- Number of twists of two BCFs in the pile yarn: 180/m
- Total fineness of the pile yarn: 2,100 (= the total fineness of BCF × 2 (number of twisted BCFs)) dtex
- Color of the pile yarn: transparent

The primary base fabric used was a PET long-fiber nonwoven fabric produced by using a polyethylene terephthalate (PET) and by a spunbond process.

- Basis weight of the primary base fabric: 100 g/m$^2$
- Total light transmittance of the primary base fabric: 71%
- Pile count density in the primary base fabric: 128.0 (pile yarns/6.45 cm$^2$)
- Thickness of the primary base fabric: 0.4 mm
- Pile height: 4.0 mm
- Basis weight of the pile layer: 555 g/m$^2$

[Backing layer]

The backing layer used was one in which a sheet-shape reinforcing material was embedded in a transparent resin layer having inorganic particles added therein.

- Material (backing resin) of the transparent resin layer: a vinyl chloride resin
- Material of the inorganic particles: aluminum oxide ($Al_2O_3$)
- Amount of the inorganic particles added: 20 parts by weight per 100 parts by weight of the vinyl chloride resin
- Reinforcing material: a woven cloth of PET
- Total light transmittance of the reinforcing material: 70%
- Total light transmittance of the backing layer: 58.8%
- Basis weight of the backing layer: 2,200 g/m$^2$
- Thickness of the backing layer: 2.0 mm

[Example 2]

A carpet of Example 2 was a carpet produced by the same method as in Example 1, except for using a pile layer and a backing layer under the following conditions.

[Pile layer]

A pile yarn used was a yarn made by twisting two BCFs similarly as in Example 1. The pile yarn of Example 2 had been spun dyed.

- Material of the pile yarn: nylon 6
- Total fineness of BCF: 1,382 dtex
- Number of filaments (monofilaments) of BCF: 66
- Fineness of the monofilaments of BCF: 20.9 dtex
- Cross-sectional shape of the monofilaments of BCF: a Y shape
- Degree of modification of the monofilaments of BCF: 1.5
- Number of twists of two BCFs in the pile yarn: 180/m
- Total fineness of the pile yarn: 2,764 (= the total fineness of BCF $\times$ 2 (number of twisted BCFs)) dtex
- Color of the pile yarn: gray

The primary base fabric used was, as in Example 1, a PET long-fiber nonwoven fabric.

- Basis weight of the primary base fabric: 100 g/m$^2$
- Total light transmittance of the primary base fabric: 71%
- Pile count density in the primary base fabric: 128.0 pile yarns/6.45 cm$^2$
- Thickness of the primary base fabric: 0.4 mm
- Pile height: 4.0 mm
- Basis weight of the pile layer: 640 g/m$^2$

[Backing layer]

A backing layer used was, as in Example 1, one in which a sheet-shape reinforcing material was embedded in a transparent resin layer having inorganic particles added therein.

- Material (backing resin) of the transparent resin layer: a vinyl chloride resin
- Material of the inorganic particles: aluminum oxide ($Al_2O_3$)
- Amount of the inorganic particles added: 20 parts by weight per 100 parts by weight of the vinyl chloride resin

- Reinforcing material: a woven cloth of PET
- Total light transmittance of the reinforcing material: 70%
- Total light transmittance of the backing layer: 58.8%
- Basis weight of the backing layer: 2,200 g/m$^2$
- Thickness of the backing layer: 2.0 mm

[Example 3]

A carpet of Example 3 was a carpet produced as in Example 2, except for using pile yarns whose spun dyeing concentration was different. The color of the pile yarns used in Example 3 was also visually gray.

[Example 4]

A carpet of Example 4 was a carpet produced as in Example 2, except for the point that the pile count density was 153.6 pile yarns/6.45 cm$^2$ (the basis weight of the pile layer was 770 g/m$^2$ accordingly).

[Example 5]

A carpet of Example 5 was a carpet produced as in Example 2, except for the point that the pile count density was 166.4 pile yarns/6.45 cm$^2$ (the basis weight of the pile layer was 830 g/m$^2$ accordingly).

[Example 6]

A carpet of Example 6 was a carpet produced as in Example 2, except for the point that the pile count density was 102.4 pile yarns/6.45 cm$^2$ (the basis weight of the pile layer was 510 g/m$^2$ accordingly).

[Example 7]

A carpet of Example 7 was a carpet produced as in Example 2, except for the point that the pile height was 6.0 mm (the basis weight of the pile layer was 900 g/m$^2$ accordingly).

[Example 8]

A carpet of Example 8 was a carpet produced as in Example 2, except for the point that the pile height was 8.0 mm (the basis weight of the pile layer was 1,170 g/m$^2$ accordingly).

[Comparative Example 1]

A carpet of Comparative Example 1 was a carpet produced as in Example 2, except for using pile yarns whose color was gray but whose spun dyeing concentration was different. The spun dyeing concentration of the pile yarns used in Comparative Example 1 were different also from the pile yarns of Example 3.

[Comparative Example 2]

A carpet of Comparative Example 2 was a carpet produced as in Example 2, except for the point that the pile count density was 185.6 pile yarns/6.45 cm$^2$ (the basis weight of the pile layer was 930 g/m$^2$ accordingly).

[Comparative Example 3]

A carpet of Comparative Example 3 was a carpet produced as in Example 2, except for the point that the pile count density was 70 pile yarns/6.45 cm$^2$ (the basis weight of the pile layer was 350 g/m$^2$ accordingly).

[Comparative Example 4]

A carpet of Comparative Example 4 was a carpet produced as in Example 2, except for the point that the amount of the inorganic particles added in the backing layer was 60 parts by weight per 100 parts by weight of the vinyl chloride resin, and the point that the total light transmittance of the backing layer was 32%.
Measurement results of the total light transmittance (%), the lightness (L value), the thickness loss rate under dynamic loading accompanied by friction (%), the basis weight (g/m$^2$), the yarn withdrawal strength (N), the warping (mm), the dimensional change rate (%) and the light resistance (class) of the carpets of Examples 1 to 8 and Comparative Examples 1 to 4 were as shown in Table 1 to Table 3.

[Table 1]

|  | Example 1 | Example 2 | Example 3 | Example 4 |
|---|---|---|---|---|
| Basis weight (g/m$^2$) | 2855 | 2940 | 2940 | 3070 |
| Lightness (L value) | 83 | 57 | 70 | 57 |
| Total light transmittance (%) | 18.99 | 0.63 | 0.75 | 0.59 |
| Yam withdrawal strength (N) | 30 | 30 | 30 | 30 |
| Warping (mm) | 1.5 or lower | 1.5 or lower | 1.5 or lower | 1.5 or lower |
| Dimensional change rate (%) | 0.10 or lower | 0.10 or lower | 0.10 or lower | 0.10 or lower |
| Light resistance (class) | 5 | 5 | 5 | 5 |
| Thickness loss rate under dynamic loading accompanied by friction (%) | 13.5 | 13.0 | 13.0 | 11.5 |

[Table 2]

|  | Example 5 | Example 6 | Example 7 | Example 8 |
|---|---|---|---|---|
| Basis weight (g/m$^2$) | 3130 | 2810 | 3200 | 3470 |
| Lightness (L value) | 57 | 57 | 57 | 57 |
| Total light transmittance (%) | 0.51 | 0.67 | 0.60 | 0.55 |
| Yam withdrawal strength (N) | 30 | 30 | 30 | 30 |
| Warping (mm) | 1.5 or lower | 1.5 or lower | 1.5 or lower | 1.5 or lower |
| Dimensional change rate (%) | 0.10 or lower | 0.10 or lower | 0.10 or lower | 0.10 or lower |
| Light resistance (class) | 5 | 5 | 5 | 5 |
| Thickness loss rate under dynamic loading accompanied by friction (%) | 11.0 | 21.0 | 15.0 | 18.0 |

[Table 3]

|  | Comparative Example 1 | Comparative Example 2 | Comparative Example 3 | Comparative Example 4 |
|---|---|---|---|---|
| Basis weight (g/m$^2$) | 2940 | 3230 | 2650 | 3340 |
| Lightness (L value) | 20 | 57 | 57 | 57 |
| Total light transmittance (%) | 0.22 | 0.42 | 0.82 | 0.22 |
| Yam withdrawal strength (N) | 30 | 30 | 30 | 25 |
| Warping (mm) | 1.5 or lower | 1.5 or lower | 1.5 or lower | 1.5 or lower |
| Dimensional change rate (%) | 0.10 or lower | 0.10 or lower | 0.10 or lower | 0.10 or lower |
| Light resistance (class) | 5 | 5 | 5 | 5 |
| Thickness loss rate under dynamic loading accompanied by friction (%) | 13.0 | 10.0 | 28.0 | 13.0 |

As understood from the results shown in Tables 1 to 3, Comparative Examples 1 to 4 did not meet at least one of the conditions 1 to 3. Specifically, the carpet of Comparative Example 1 did not meet the conditions 1 and 2; the carpet of Comparative Example 2 did not meet the condition 1; the carpet of Comparative Example 3 did not meet the condition 3; and the carpet of Comparative Example 4 did not meet the condition 1. By contrast, Examples 1 to 8 met all the conditions 1 to 3. Therefore, the carpets of Examples 1 to 8, since they met the conditions 1 and 2, had better light transmissiveness, and since they met the condition 3, were capable of retaining quality including the light transmissiveness.

The above light transmissiveness was evaluated by actually disposing the carpets of Examples 1 to 8 and Comparative Examples 1 to 4 on an LED display (NS-FM2115S), manufactured by Orbical K.K., and visually examining how texts were viewed through the carpets. As a result, through the carpets of Examples 1 to 8 and Comparative Example 3, which met the conditions 1 and 2, the texts could clearly be recognized; and in particular, through those of Examples 1, 3 and 6 and Comparative Example 3, the texts could be recognized more clearly. By contrast, through the carpets of Comparative Examples 1, 2 and 4, which did not meet the conditions 1 and 2, the texts could not suitably be recognized. Therefore, it is found that when carpets meeting the conditions 1 and 2 were disposed on the display, texts on the display were clearly recognized through the carpets. Even in Comparative Example 3, which did not meet the condition 3, texts on the display were recognized through the carpet right after the carpet was disposed on the display as described above. It is expected, however, that, in Comparative Example 3, the light transmissiveness would degrade during its use and the texts would become unable to be recognized. By contrast, the carpets of Examples 1 to 8 meeting the conditions 1 to 3 can retain the quality including the light transmissiveness over a long period, and the texts displayed on the display can continuously be recognized through the carpets as described above.

The carpets of Examples 4, 5 and 6 and Comparative Examples 2 and 3 had substantially the same constitution as the carpet of Example 2, except for the point that the pile count density was different. Specifically, the pile count densities of Examples 2, 4, 5 and 6 were 128.0 pile yarns/6.45 cm$^2$, 153.6 pile yarns/6.45 cm$^2$, 166.4 pile yarns/6.45 cm$^2$ and 102.4 pile yarns/6.45 cm$^2$, respectively. The pile count densities of Comparative Examples 2 and 3 were 185.6 pile yarns/6.45 cm$^2$ and 70 pile yarns/6.45 cm$^2$, respectively. Such differences in the pile count density caused differences in the total light transmittance and the thickness loss rate under dynamic loading accompanied by friction. Specifically, as the pile count density was made high, the total light transmittance decreased and the thickness loss rate under dynamic loading accompanied by friction became low. Hence, adjusting the pile count density could control the thickness loss rate under dynamic loading accompanied by friction, while it reduced the total light transmittance.

From comparison of the results of Examples 2, 4, 5 and 6 and Comparative Examples 2 and 3 shown in Tables 1 to 3, it is understood that by setting the pile count density to 80 to 180 pile yarns/6.45 cm$^2$, the condition 1 and the condition 3 could be met, that is, a high total light transmittance was attained and the loss rate could be reduced. Further from comparison of the results of Examples 2, 4 and 5, it is found that when the pile count density was 100 to 170 pile yarns/6.45 cm$^2$, a high total light transmittance is attained and the loss rate can be reduced more. From the similar viewpoint, it is preferable that the pile count density is 105 to 160 pile yarns/6.45 cm$^2$.

The carpets of Example 3 and Comparative Example 1 had substantially the same constitution as the carpet of Example 2, except for the point that the spun dyeing concentration of the pile yarn used was different. The results of Examples 2 and 3 and Comparative Example 1 in Table 1 and Table 3 shows that the difference in the spun dyeing concentration led to the difference in the lightness (L value), and further the difference in the lightness led to the difference in the total light transmittance. Then, by meeting the condition 2, that is, by the lightness (L value) being 30 or higher, the total light transmittance was 0.5% or higher, that is, the condition 1 was met. Hence, it is understandable that controlling the lightness could improve the light transmissiveness of the carpet, and in order to attain a high total light transmittance, the lightness needed to be 30 or higher.

The carpets of Examples 7 and 8 had substantially the same constitution as the carpet of Example 2, except for the point that the pile height was different. From the results of Examples 2, 7 and 8 shown in Table 1 and Table 2, it is understandable that depending on the pile height, the total light transmittance and the thickness loss rate under dynamic loading accompanied by friction can be adjusted, and by the pile height being 4 to 10 mm, preferably 4 to 8 mm, the conditions 1 and 3 are more easily met.

[Example 9]

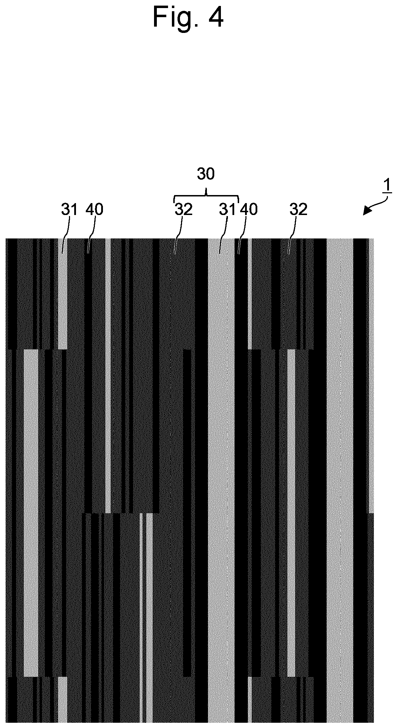

The pile layer (lightness: 83) of the carpet 1 of Example 1 was dyed by using an inkjet dyeing machine so as to provide a patterned carpet in which two or more ivory-color regions 31 (lightness: 69), gray-color regions 32 (lightness: 40) and black-color regions 40 (lightness: 15) as shown in Figure 4 were formed. The proportion of the total area of the regions 31 and 32, which had a lightness of 30 or higher, was 30% based on the total area of the dyed carpet 1 in plan view viewed from the pile layer side. The total light transmittance of each regions of the carpet 1 was measured and the ivory-color regions 31 exhibited 17.42%; the gray-color regions 32, 2.16%; and the black-color regions 40, 0.13%. In the carpet 1 according to the present Example, the ivory-color regions 31 and the gray-color regions 32 corresponded to first portions 30 which could transmit light well; and among these, the ivory-color regions 31 could transmit light especially well. In the carpet 1 according to the present Example, the black-color regions 4 corresponded to second portions having a total light transmittance of lower than 0.5%.

Hitherto, various embodiments and Examples of the present invention have been described. However, the present invention is not limited to exemplified various embodiments and Examples, and is intended to include all changes and modifications disclosed in the claims and within the spirit and the scope of the equivalents of the claims.

For example, when the carpet meets the conditions 1 to 3, the backing layer may be arranged on the pile layer, for example, through another layer like a precoat layer. Further, the conditions of each constituent indicated in embodiments and Examples may suitably be combined so as to meet the conditions 1 to 3.

Reference Signs List

1 ... CARPET, 10 ... PILE LAYER, 11 ... PRIMARY BASE FABRIC, 11a ... FRONT FACE, 11b ... BACK FACE, 12 ... PILE YARN, 20 ... BACKING LAYER, 30 ... FIRST PORTION, 31 ... FIRST REGION MEETING CONDITIONS 1 TO 3, 32 ... SECOND REGION MEETING CONDITIONS 1 TO 3, 33 ... THIRD REGION MEETING CONDITIONS 1 TO 3, and 40 ... SECOND PORTION

All the publications, patents and patent applications quoted in the present description are incorporated as they are by reference in the present description.

**Claims**

1. A carpet, comprising: a pile layer comprising a primary base fabric and a plurality of pile yarns tufted on a front face of the primary base fabric; and a backing layer disposed on a back face side of the primary base fabric,
   wherein a total light transmittance of the carpet is 0.5% or higher;
   a lightness when the carpet is viewed from the front face side of the primary base fabric is 30 or higher; and
   a thickness loss rate under dynamic loading accompanied by friction of the carpet is 25% or lower.

2. The carpet according to claim 1, wherein a yarn count density of the pile yarns in the pile layer is 80 to 180 pile yarns/6.45 cm$^2$.

3. The carpet according to claim 1 or 2, wherein
   a total light transmittance of the primary base fabric is 60% or higher; and
   a total light transmittance of the backing layer is 50% or higher.

4. The carpet according to any one of claims 1 to 3, wherein a pile height of the pile layer is 4 to 10 mm.

5. The carpet according to any one of claims 1 to 4, wherein
   the pile yarns comprise a polyamide-based fiber;
   the primary base fabric is a polyester-based long-fiber nonwoven fabric; and
   the backing layer comprises a vinyl chloride resin and a reinforcing material.

6. The carpet according to any one of claims 1 to 5, wherein a thickness of the backing layer is 1 to 4 mm.

7. The carpet according to any one of claims 1 to 6, wherein the backing layer is in contact with the back face of the primary base fabric.

8. The carpet according to any one of claims 1 to 7, wherein the pile yarns comprise monofilaments and a degree of modification of the monofilaments is 1.1 to 8.

9. The carpet according to any one of claims 1 to 8, wherein
   the carpet comprises two or more regions; and
   the two or more regions each have a total light transmittance different from a total light transmittance of other one or more regions among the two or more regions.

10. The carpet according to claim 9, wherein a lightness when each of the two or more regions is viewed from the front face side of the primary base fabric is different from a lightness when other one or more regions among the two or more regions are viewed from the front face side of the primary base fabric.

11. A carpet, comprising: a pile layer comprising a primary base fabric and a plurality of pile yarns tufted on a front face of the primary base fabric; and a backing layer disposed on a back face side of the primary base fabric,
wherein the carpet comprises a first portion and a second portion;
a total light transmittance of the first portion is 0.5% or higher;
a lightness when the first portion is viewed from the front face side of the primary base fabric is 30 or higher;
a thickness loss rate under dynamic loading accompanied by friction of the first portion is 25% or lower; and
a total light transmittance of the second portion is lower than 0.5%.

12. The carpet according to claim 11, wherein in the first portion of the carpet, a yarn count density of the pile yarns in the pile layer is 80 to 180 pile yarns/6.45 cm$^2$.

13. The carpet according to claim 11 or 12, wherein in the first portion of the carpet,
a total light transmittance of the primary base fabric is 60% or higher; and
a total light transmittance of the backing layer is 50% or higher.

14. The carpet according to any one of claims 11 to 13, wherein in the first portion of the carpet, a pile height of the pile layer is 4 to 10 mm.

15. The carpet according to any one of claims 11 to 14, wherein in the first portion of the carpet,
the pile yarns comprise a polyamide-based fiber;
the primary base fabric is a polyester-based long-fiber nonwoven fabric; and
the backing layer comprises a vinyl chloride resin and a reinforcing material.

16. The carpet according to any one of claims 11 to 15, wherein in the first portion of the carpet, a thickness of the backing layer is 1 to 4 mm.

17. The carpet according to any one of claims 11 to 16, wherein in the first portion of the carpet, the backing layer is in contact with the back face of the primary base fabric.

18. The carpet according to any one of claims 11 to 17, wherein in the first portion of the carpet, the pile yarns comprise monofilaments and a degree of modification of the monofilaments is 1.1 to 8.

19. The carpet according to any one of claims 11 to 18, wherein
the first portion of the carpet comprises two or more regions; and
the two or more regions each have a total light transmittance different from a total light transmittance of other one or more regions among the two or more regions.

20. The carpet according to claim 19, wherein a lightness when each of the two or more regions is viewed from the front face side of the primary base fabric is different from a lightness when other one or more regions among the two or more regions are viewed from the front face side of the primary base fabric.

21. The carpet according to any one of claims 11 to 20, wherein a lightness when the first portion is viewed from the front face side of the primary base fabric is different from a lightness when the second portion is viewed from the front face side of the primary base fabric.

22. A method for producing the carpet according to claim 10, the method comprising:

providing a carpet comprising: a pile layer comprising a primary base fabric and a plurality of pile yarns tufted on the front face of the primary base fabric; and a backing layer disposed on the back face side of the primary base fabric,
wherein a total light transmittance of the carpet is 0.5% or higher,
a lightness when the carpet is viewed from the front face side of the primary base fabric is 30 or higher, and
a thickness loss rate under dynamic loading accompanied by friction of the carpet is 25% or lower; and
region-selectively dyeing the pile layer of the carpet to form the two or more regions having different lightnesses in the case of being viewed from the front face side of the primary base fabric.

23. A method for producing the carpet according to claim 20, the method comprising:

providing a carpet comprising: a pile layer comprising a primary base fabric and a plurality of pile yarns tufted on the front face of the primary base fabric; and a backing layer disposed on the back face side of the primary base fabric,

wherein a total light transmittance of the carpet is 0.5% or higher, a lightness when the carpet is viewed from the front face side of the primary base fabric is 30 or higher, and a thickness loss rate under dynamic loading accompanied by friction of the carpet is 25% or lower; and region-selectively dyeing the pile layer of the carpet to form the first portion comprising the two or more regions having different lightnesses in the case of being viewed from the front face side of the primary base fabric.

24. A method for producing the carpet according to claim 21, the method comprising:

providing a carpet comprising: a pile layer comprising a primary base fabric and a plurality of pile yarns tufted on the front face of the primary base fabric; and a backing layer disposed on the back face side of the primary base fabric,

wherein a total light transmittance of the carpet is 0.5% or higher, a lightness when the carpet is viewed from the front face side of the primary base fabric is 30 or higher, and a thickness loss rate under dynamic loading accompanied by friction of the carpet is 25% or lower; and region-selectively dyeing the pile layer of the carpet to form the first portion and the second portion having different lightnesses in the case of being viewed from the front face side of the primary base fabric.

Fig. 1

# Fig. 2

# Fig. 3

# Fig. 4

## INTERNATIONAL SEARCH REPORT

International application No.

PCT/JP2019/014096

| A. CLASSIFICATION OF SUBJECT MATTER |
|---|
| Int.Cl. A47G27/02(2006.01)i, B32B5/02(2006.01)i |

According to International Patent Classification (IPC) or to both national classification and IPC

| B. FIELDS SEARCHED |
|---|
| Minimum documentation searched (classification system followed by classification symbols) |
| Int.Cl. A47G27/02, B32B5/02 |

Documentation searched other than minimum documentation to the extent that such documents are included in the fields searched

| | |
|---|---|
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)

| C. DOCUMENTS CONSIDERED TO BE RELEVANT | | |
|---|---|---|
| Category* | Citation of document, with indication, where appropriate, of the relevant passages | Relevant to claim No. |
| Y | JP 2012-507826 A (KONINKLIJKE PHILIPS ELECTRONICS N.V.) 29 March 2012, paragraphs [0011], [0016]-[0018], [0021], [0036]-[0037], [0039]-[0042], [0049], [0057], [0061], [0089], [0098]-[0100], [0130]-[0154], [0192], fig. 1-9j & US 2011/0203147 A1, paragraphs [0011], [0016]-[0018], [0021], [0037]-[0038], [0040]-[0044], [0052], [0059], [0062], [0091], [0100]-[0102], [0138]-[0163], [0201], fig. 1-9j & WO 2010/052606 A2 & CN 102203336 A & KR 10-2011-0095296 A | 1-24 |

☒ Further documents are listed in the continuation of Box C.　☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 07 June 2019 (07.06.2019) | 18 June 2019 (18.06.2019) |

| Name and mailing address of the ISA/<br>Japan Patent Office<br>3-4-3, Kasumigaseki, Chiyoda-ku,<br>Tokyo 100-8915, Japan | Authorized officer |
|---|---|
| | Telephone No. |

Form PCT/ISA/210 (second sheet) (January 2015)

## INTERNATIONAL SEARCH REPORT

| International application No. |
| --- |
| PCT/JP2019/014096 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 8-56810 A (TORAY INDUSTRIES, INC.) 05 March 1996, paragraphs [0015]-[0020], [0033], [0039], fig. 1-5 (Family: none) | 1-24 |
| Y | JP 2008-6160 A (KAWASHIMA SELKON TEXTILES CO., LTD.) 17 January 2008, paragraphs [0021]-[0025], [0028], [0030], fig. 1-3, 5 (Family: none) | 1-24 |
| Y | JP 2015-181504 A (TORAY INDUSTRIES, INC.) 22 October 2015, paragraph [0057] (Family: none) | 2-10, 12-24 |
| Y | JP 2016-73374 A (TORAY INDUSTRIES, INC.) 12 May 2016, paragraphs [0031]-[0039] (Family: none) | 5-10, 15-24 |
| Y | JP 2012-165990 A (TORAY INDUSTRIES, INC.) 06 September 2012, paragraphs [0002], [0006], [0010], [0014]-[0015], [0027]-[0033], [0039]-[0047], [0053]-[0056] (Family: none) | 9-10, 19-24 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011505181 A
- JP 2012517263 A

- JP 2018068223 A